# EUROPEAN PATENT APPLICATION

(11) **EP 4 610 933 A1**
(43) Date of publication of application: **03.09.2025**
(21) Application number: 23882278.7
(22) Date of filing: 15.09.2023
(51) Int. Cl.: G06T 19/00, G06F 3/0481

(54) **INFORMATION PROCESSING DEVICE, METHOD, AND PROGRAM**

(30) Priority: 26.10.2022 JP 2022171475
(71) Applicant: FUJIFILM Corporation, Tokyo 106-8620 (JP)
(72) Inventor: OSHIMA Hiroyuki, Saitama-shi, Saitama 331-9624 (JP)
(74) Representative: Meissner Bolte Partnerschaft mbB
(86) International application number: PCT/JP2023/033648
(87) International publication number: WO 2024/090065

(57) **Abstract**

Provided are an information processing device, an information processing method, and an information processing program that can provide a composite space or a virtual space having excellent interestingness. First information related to an environment of a space in which an object is caused to appear is acquired. Second information related to a behavior history of a user is acquired. A first element related to the object is determined based on the first information. A second element related to the object is determined based on the second information. The object to be caused to appear in the space is determined based on the first element and the second element.

## Description

### BACKGROUND OF THE INVENTION

### 1. Field of the Invention

The present invention relates to an information processing device, an information processing method, and an information processing program, and particularly to an information processing device, an information processing method, and an information processing program that provide a composite space in which a real world and a virtual world are fused, or a virtual space.

### 2. Description of the Related Art

Augmented reality (AR) is known as a technology of displaying a virtual world superimposed on a real world. AR expands the real world by displaying digital contents, such as a character created by computer graphics (CG), in a superimposed manner on a real scene.

JP2018-36869A discloses a technology of changing decoration of a character to be superimposed in accordance with a usage status (intimacy degree) of the character and a use environment (season, place, and the like), regarding a technology of creating an augmented reality image in which a character is superimposed.

In addition, JP2019-212062A discloses a technology of specifying a surrounding environment from a captured image and causing a character suitable for the specified surrounding environment to appear, regarding a technology of creating an augmented reality image in which a character is superimposed.

In addition, WO2016/111067A discloses a technology of estimating an attribute of a user from a behavior history of the user and selecting an attribute of a character based on the estimated attribute.

### SUMMARY OF THE INVENTION

One embodiment according to the technology of the present disclosure provides an information processing device, an information processing method, and an information processing program that can provide a composite space or a virtual space having excellent interestingness.
(1) An information processing device comprising: a processor, in which the processor is configured to: acquire first information related to an environment of a space in which an object is caused to appear; acquire second information related to a behavior history of a user; determine a first element related to the object based on the first information; determine a second element related to the object based on the second information; and determine the object to be caused to appear in the space based on the first element and the second element.
(2) The information processing device according to (1), in which the processor is configured to: acquire a first image obtained by imaging the space in which the object is caused to appear; and generate a second image in which the object is superimposed on the first image.
(3) The information processing device according to (2), in which the processor is configured to: process the first image to recognize an object in the first image or a scene of the first image and acquire the first information.
(4) The information processing device according to (3), in which the processor is configured to: acquire information on a position of the user; and recognize the object in the first image or the scene of the first image and acquire the first information in a case in which the user exists in a specific area.
(5) The information processing device according to any one of (1) to (4), in which the second information includes information on a history of movement of the user or information on a history of the object caused to appear.
(6) The information processing device according to any one of (1) to (5), in which the first element is a type of the object to be caused to appear, and the second element is a display form or an attribute of the object to be caused to appear.
(7) The information processing device according to any one of (1) to (6), in which the processor is configured to: process an image obtained by imaging the space in which the object is caused to appear, to recognize a main subject; and determine a disposition region of the object to be caused to appear in the space based on a position of the main subject in the space.
(8) The information processing device according to (7), in which the processor is configured to: determine the type of the object to be caused to appear based on the first information in the disposition region.
(9) The information processing device according to any one of (6) to (8), in which the processor is configured to: randomly determine the display form of the object in a case in which the behavior history of the user satisfies a specific condition.
(10) The information processing device according to any one of any one of (2) to (4), in which the processor is configured to: change a display form or an attribute of the object in response to an instruction to output the second image.
(11) An information processing method comprising: a step of acquiring first information related to an environment of a space in which an object is caused to appear; a step of acquiring second information related to a behavior history of a user; a step of determining a first element related to the object based on the first information; a step of determining a second element related to the object based on the second information; and a step of determining the object to be caused to appear in the space based on the first element and the second element.
(12) An information processing program causing a computer to implement: a function of acquiring first information related to an environment of a space in which an object is caused to appear; a function of acquiring second information related to a behavior history of a user; a function of determining a first element related to the object based on the first information; a function of determining a second element related to the object based on the second information; and a function of determining the object to be caused to appear in the space based on the first element and the second element.

### BRIEF DESCRIPTION OF THE DRAWINGS

Fig. 1 is a diagram showing an outline of information processing.
Fig. 2 is a diagram showing an example of a hardware configuration of a mobile terminal.
Fig. 3 is a block diagram of main functions of the mobile terminal regarding AR display.
Fig. 4 is a block diagram of main functions of an environment information acquisition unit.
Figs. 5A and 5B are diagrams showing an example of recognition of an object.
Fig. 6 is a block diagram of main functions of an AR object determination unit.
Fig. 7 is a conceptual diagram of determination of a disposition region of an AR object.
Fig. 8 is a diagram showing an example of information recorded in an AR object database.
Fig. 9 is a diagram showing an example of a display form of the AR object.
Figs. 10A and 10B are diagrams showing an example of an AR image.
Fig. 11 is a flowchart showing an operation procedure of the mobile terminal in a case of performing the AR display.
Fig. 12 is a flowchart showing a procedure of processing of determining the display form of the AR object.
Fig. 13 is a conceptual diagram of generation of the AR image.
Fig. 14 is a flowchart showing an example of a processing procedure in a case in which the display form of the AR object is determined by performing lottery draw.
Fig. 15 is a diagram showing an example of a lottery draw screen.
Fig. 16 is a block diagram of main functions of the AR object determination unit.
Fig. 17 is a diagram showing an example of the information recorded in the AR object database.
Fig. 18 is a diagram showing an example of an appearance of a character.
Fig. 19 is a flowchart showing a procedure of processing of determining the appearance of the character.
Fig. 20 is a diagram showing an example of the AR display.
Fig. 21 is a diagram showing an example of a case in which the character performs a specific motion by imaging.
Fig. 22 is a diagram showing an example of display in a case of printing.
Fig. 23 is a diagram showing an example of history data of an attribute change of the character.
Figs. 24A and 24B are conceptual diagrams showing an example of disposition of the character.
Fig. 25 is a conceptual diagram showing an example of disposition of the character using image recognition.
Fig. 26 is a conceptual diagram of printing.

### DESCRIPTION OF THE PREFERRED EMBODIMENTS

Hereinafter, preferred embodiments of the present invention will be described based on the accompanying drawings.

### [First Embodiment]

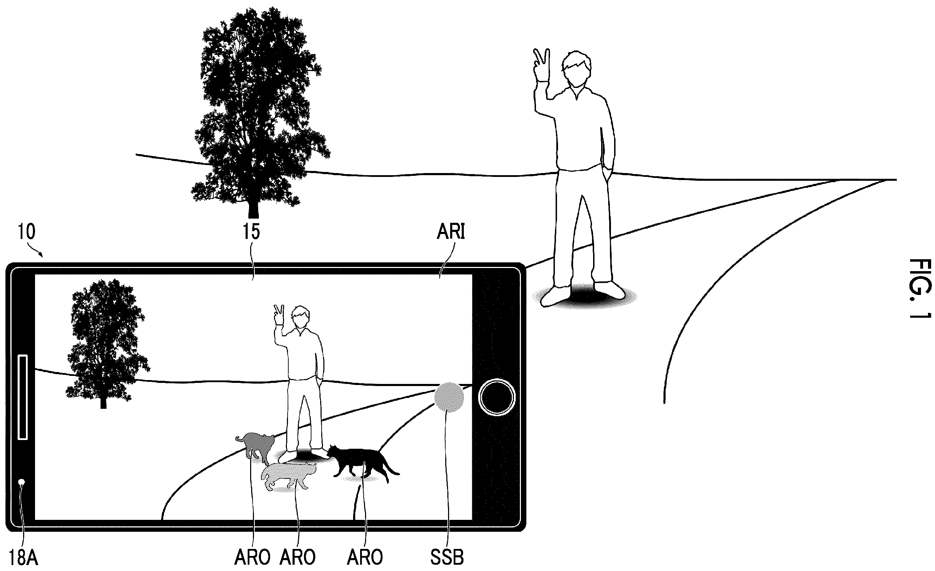

Fig. 1 is a diagram showing an outline of information processing according to the present embodiment.

As shown in Fig. 1, the information processing according to the present embodiment provides a composite space in which a real world and a virtual world are fused, by using a mobile terminal 10 comprising a camera and a display. Specifically, an augmented reality image (AR image) is generated by superimposing an augmented reality object (AR object) ARO created by CG on an image of a real space (real space, existing space) captured by the camera of the mobile terminal 10, and the AR image is displayed on a display 15 of the mobile terminal 10. The AR object ARO is caused to appear with a position of a user as a trigger. In this case, a type, a display form, or an attribute is determined based on an environment of a space of appearance (environment of a space imaged by the camera) and a behavior history of the user. As a result, it is possible to provide the composite space with excellent interestingness.

### [Configuration of Mobile Terminal]

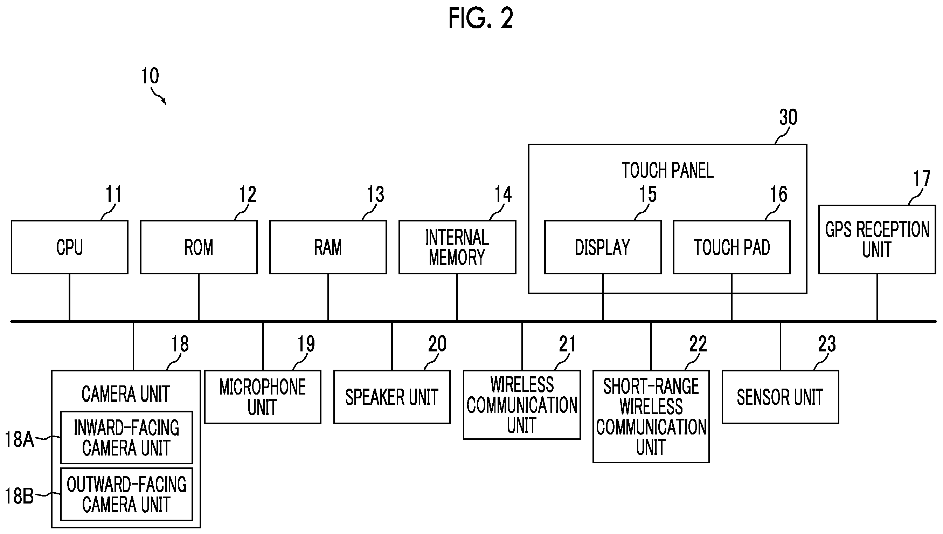

Fig. 2 is a diagram showing an example of a hardware configuration of the mobile terminal.

The mobile terminal 10 shown in Fig. 2 is a so-called smartphone. The mobile terminal 10 comprises a central processing unit (CPU) 11 that controls an overall operation, a read-only memory (ROM) 12 that stores a basic input output program and the like, a random-access memory (RAM) 13 that is used as a work area of the CPU 11, an internal memory 14, a display 15, a touch pad 16 that detects a touch operation (position input) on a display screen, a GPS reception unit 17 that receives a GPS signal including position information (latitude, longitude, and altitude) of the mobile terminal 10 by global positioning systems (GPS) satellite or an indoor messaging system (IMES) as an indoor GPS, a camera unit 18 that electronically captures an image, a microphone unit 19 that inputs a voice via a microphone, a speaker unit 20 that outputs a voice via a speaker, a wireless communication unit 21 that wirelessly communicates with a nearby base station or the like via an antenna, a short-range wireless communication unit 22 that performs short-range wireless communication with an external device via an antenna, a sensor unit 23 that performs various types of sensing, and the like. The internal memory 14 is configured by a non-volatile memory such as an electrically erasable programmable read-only memory (EEPROM).

In addition to various programs (for example, an information processing program) including an operating system, the internal memory 14 stores data necessary for various controls and processing, image data captured by an inward-facing camera unit 18A and an outward-facing camera unit 18B, and the like.

The display 15 is configured by, for example, a liquid crystal display (LCD), an organic light emitting diode (OLED) display, or the like. The display 15 constitutes a touch panel 30 together with the touch pad 16. The touch panel 30 constitutes an operation unit of the mobile terminal 10.

The camera unit 18 is configured by the inward-facing camera unit 18A and the outward-facing camera unit 18B. The inward-facing camera unit 18A is a camera mounted on a front surface side of a housing of the mobile terminal 10 (see Fig. 1). The outward-facing camera unit 18B is a camera mounted on a rear surface side of the housing of the mobile terminal 10. It should be noted that the front surface of the housing of the mobile terminal 10 refers to a surface of the housing of the mobile terminal 10 on which the display 15 is provided. Therefore, the inward-facing camera unit 18A is a camera mounted on the display 15 side. The inward-facing camera unit 18A and the outward-facing camera unit 18B are digital cameras and have an optical system and an image sensor. The image sensor is configured by, for example, a complementary metal oxide semiconductor (CMOS) image sensor, a charge coupled device (CCD) image sensor, or the like. It should be noted that, hereinafter, unless otherwise specified, the image captured by the camera unit 18 means an image captured by any of the inward-facing camera unit 18A and the outward-facing camera unit 18B.

The wireless communication unit 21 performs wireless communication with the base station using, for example, a cellular system such as a 5th generation mobile communication system (5G), a 4th generation mobile communication system (4G), or long term evolution (LTE).

The short-range wireless communication unit 22 wirelessly communicates with an external device by, for example, a short-range wireless communication method, such as Wi-Fi (registered trademark) or Bluetooth (registered trademark).

The sensor unit 23 includes various sensors such as an acceleration sensor, an angular velocity sensor (gyro sensor), a geomagnetic sensor, an ambient light sensor, a proximity sensor, light detection and ranging (LiDAR), and a biometric sensor.

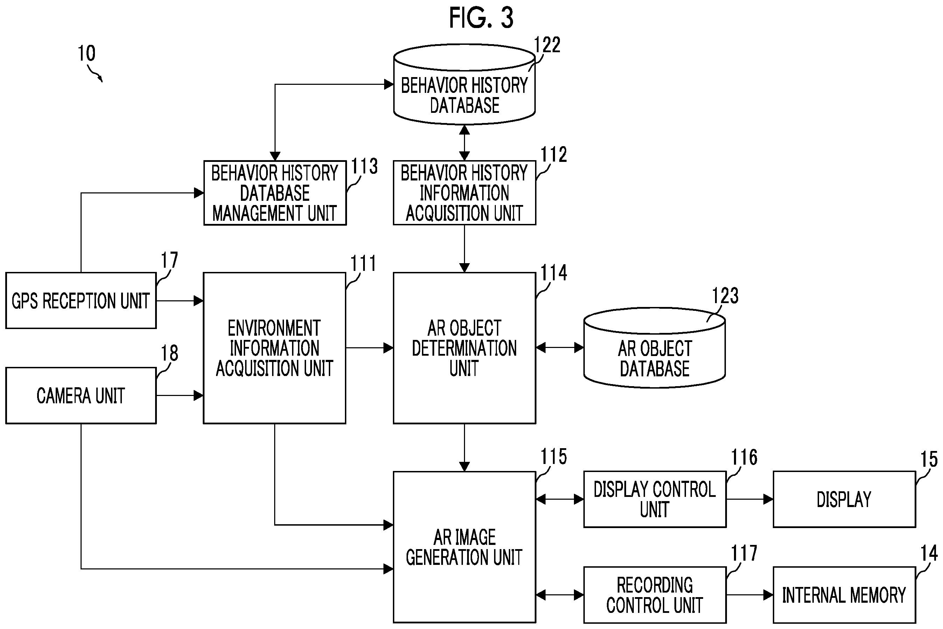

Fig. 3 is a block diagram of main functions of the mobile terminal regarding AR display.

As shown in Fig. 3, the mobile terminal 10 has functions of an environment information acquisition unit 111, a behavior history information acquisition unit 112, a behavior history database management unit 113 (database (DB)), an AR object determination unit 114, an AR image generation unit 115, a display control unit 116, a recording control unit 117, and the like regarding the AR display. These functions are implemented by the CPU 11 executing a predetermined program (information processing program).

The environment information acquisition unit 111 acquires information related to the environment of the space in which the AR object is caused to appear. The information related to the environment of the space includes various types of information that form the space or characterize the space, such as geographical information of the space and information on an object that constitutes the space or on an object that exists in the space. The information related to the environment of the space in which the AR object is caused to appear is an example of first information. In the present embodiment, since the AR image is generated by superimposing the AR object on the captured image, the object included in the image during imaging is recognized, and the information related to the environment of the space in which the AR object is caused to appear is acquired. In addition, information on a current position of the user (position at which imaging is performed) is acquired, and the information on the environment of the space in which the AR object is caused to appear is acquired.

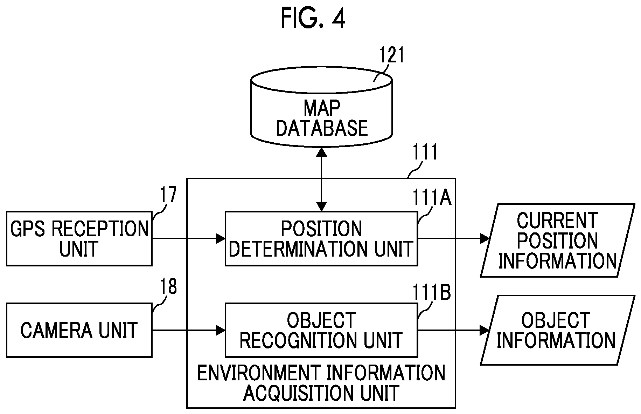

Fig. 4 is a block diagram of main functions of the environment information acquisition unit.

As shown in Fig. 4, the environment information acquisition unit 111 according to the present embodiment has functions of a position determination unit 111A, an object recognition unit 111B, and the like.

The position determination unit 111A determines a current position of the mobile terminal 10. The current position of the mobile terminal 10 is the current position of the user (position at which imaging is performed). The position determination unit 111A determines the current position of the mobile terminal 10 based on the GPS signal received by the GPS reception unit 17 and a map database 121.

In the map database 121, a specific point (point of interest; POI) on the map is recorded in association with its position information (latitude, longitude, and altitude). The point is a concept including a region or an area. Also, the point can also be specified by a facility such as a park, an amusement park, an aquarium, and a museum, a store such as a department store and a restaurant, a famous place such as a shrine and a temple, a tourist destination, and the like.

The position determination unit 111A acquires information on position information (latitude, longitude, and altitude) included in the GPS signal, searches for information on a point corresponding to the position information from the map database 121, and acquires the information on the current position of the mobile terminal 10. In a case in which the information on the point corresponding to the acquired position information does not exist in the map database 121, the position determination unit 111A determines that the position is unknown. The result of determination is output as the current position information of the mobile terminal 10.

The object recognition unit 111B analyzes the image captured by the camera unit 18 to recognize the object (object) included in the image. More specifically, the detection of the object and the detection of the region thereof are performed. The object here includes the sky, the ground (including the road), and the like. A known technology is adopted for the recognition of the object. For example, a technology of object recognition (object recognition) using artificial intelligence (AI) can be used. As an example, a configuration can be adopted in which the object is recognized using a trained model that has been trained through machine learning to perform object recognition. In this case, for example, a model using semantic segmentation, instance segmentation, panoptic segmentation, and the like can be adopted as the trained model.

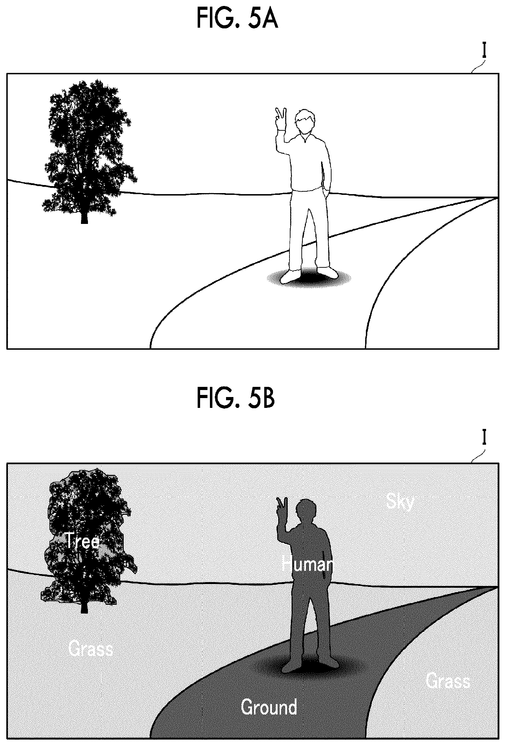

Figs. 5A and 5B are diagrams showing an example of the recognition of the object.

Fig. 5A shows a captured image I (image captured by the camera unit 18). Fig. 5B shows an example of a result of recognition of the object with respect to the captured image I. As shown in Fig. 5B, the region of the object in the image is specified, and the region is divided for each individual to recognize the type of the object. In the example shown in Figs. 5A and 5B, human, grass, ground, tree, and sky are recognized as the objects from the captured image I.

The object recognition unit 111B may be configured to recognize only a specific object determined in advance. For example, a configuration may be adopted in which only a human and the ground (grass, ground, artificial ground, and the like) are recognized.

The object recognition unit 111B performs object recognition processing in a case in which the current position of the mobile terminal 10 is a specific point recorded in the map database 121.

The behavior history information acquisition unit 112 acquires information related to a behavior history of the user. The information related to the behavior history of the user is an example of second information. In the present embodiment, information on a location history is acquired as the behavior history of the user. The location history is a record of a place, a route, and the like visited by the user by carrying the mobile terminal 10 as the history. The behavior history information acquisition unit 112 acquires the information related to the behavior history of the user from the behavior history database 122. In the present embodiment, the information on the location history is acquired. The behavior history database 122 records the information related to the behavior history of the user. In the present embodiment, the information on the location history is recorded.

The behavior history database management unit 113 manages the behavior history database 122. In the present embodiment, the information on the location history is recorded in the behavior history database 122. Therefore, the behavior history database management unit 113 manages the information on the location history. The behavior history database management unit 113 acquires the position information of the mobile terminal 10 via the GPS reception unit 17 and manages the location history of the user. That is, the user manages the histories of a place, a route, and the like that the user has visited.

The AR object determination unit 114 determines the augmented reality object (AR object) to be caused to appear. The AR object determination unit 114 determines the AR object based on the information acquired by the environment information acquisition unit 111 and the information acquired by the behavior history information acquisition unit 112. In the present embodiment, the AR object is determined based on the information on the object (object information) in the captured image I acquired by the environment information acquisition unit 111 and the information on the location history (location history information) acquired by the behavior history information acquisition unit 112.

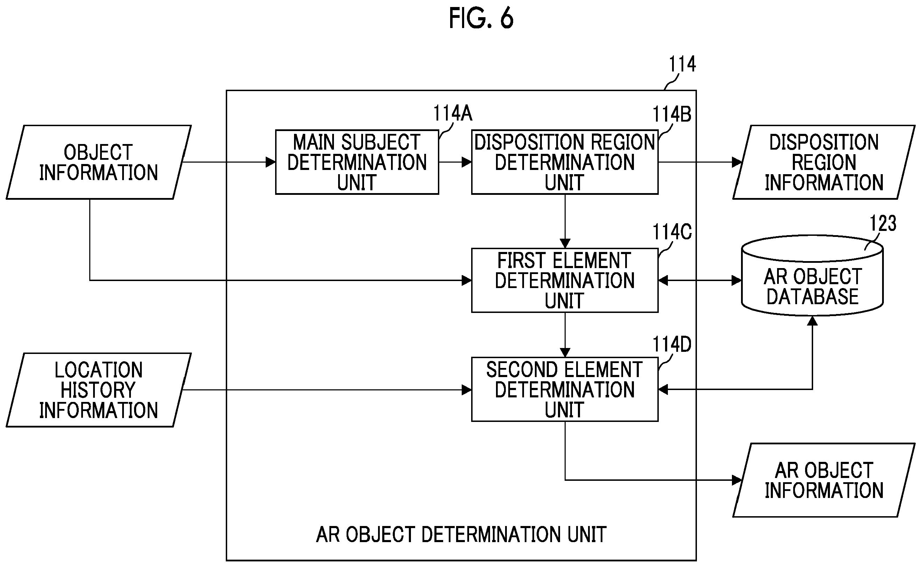

Fig. 6 is a block diagram of main functions of the AR object determination unit.

As shown in Fig. 6, the AR object determination unit 114 has functions of a main subject determination unit 114A, a disposition region determination unit 114B, a first element determination unit 114C, a second element determination unit 114D, and the like.

The main subject determination unit 114A determines a main subject based on the information on the object (object information) in the captured image I. In the present embodiment, the human in the captured image I is determined as the main subject. In a case in which a plurality of humans are included in the captured image I, the main subject determination unit 114A determines the main subject based on a position, a size, and the like in the image. For example, a human closer to the center is recognized as the main subject. In addition, a human having a larger size is recognized as the main subject.

The disposition region determination unit 114B determines a disposition region of the AR object based on the result of determination of the main subject by the main subject determination unit 114A.

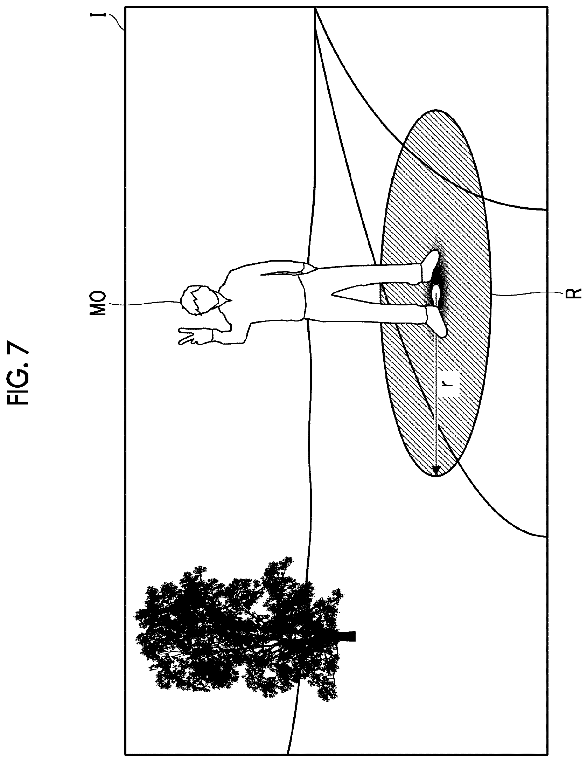

Fig. 7 is a conceptual diagram of the determination of the disposition region of the AR object.

In Fig. 7, a region indicated by a diagonal line is a disposition region R of the AR object. In the present embodiment, a region around the main subject MO and a ground region are the disposition region R of the AR object. Fig. 7 is an example of a case in which a region within a circle having a radius r centered on a main subject MO is set as the disposition region R of the AR object. The radius r may be constant or may be set in accordance with the size of the main subject MO and/or the distance to the main subject MO in the captured image I.

The first element determination unit 114C determines, as a first element of the AR object to be caused to appear, the type of the AR object. In the present embodiment, the type of the AR object is determined based on the information on the environment of the disposition region R. More specifically, the type of the AR object is determined based on the information on the object recognized in the disposition region R.

The first element determination unit 114C refers to the information recorded in the AR object database 123 to determine the type of the AR object.

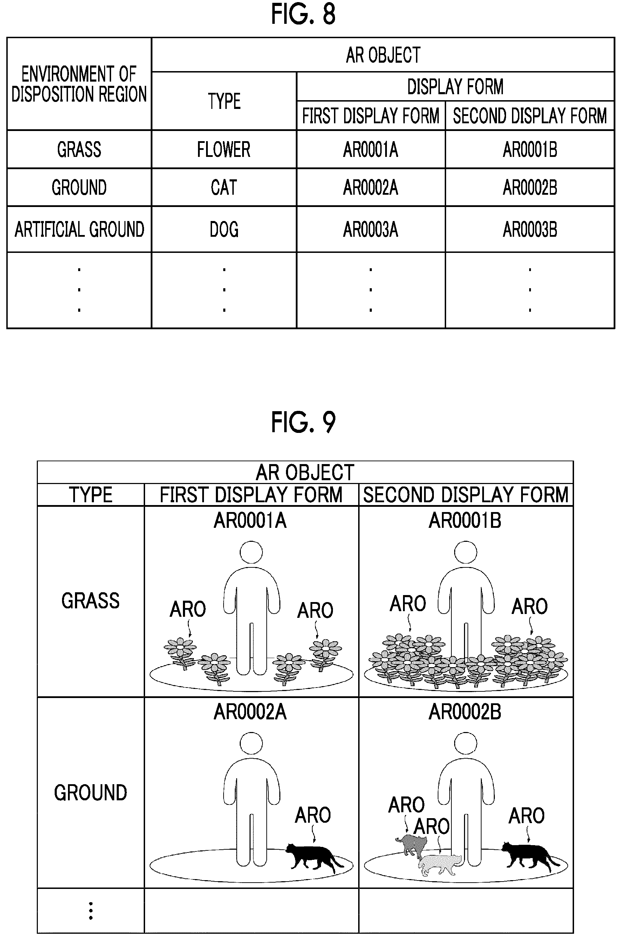

Fig. 8 is a diagram showing an example of the information recorded in the AR object database.

As shown in Fig. 8, the information on the type and the display form of the AR object to be displayed for each environment of the disposition region is recorded. The information on the display form includes data of the AR object required for display. Each AR object is formed by, for example, three-dimensional computer graphics (3DCG). Therefore, the data of the AR object is formed by data of three-dimensional CG.

The first element determination unit 114C selects an AR object corresponding to the environment (recognized object) of the disposition region R from among a plurality of types of AR objects recorded in the AR object database 123. For example, according to the example of Fig. 8, in a case in which the environment of the disposition region R is "ground", the type of the AR object to be caused to appear is "cat".

In a case in which the disposition region R includes a plurality of environments (recognized objects), the environment with the highest occupancy rate is the environment of the disposition region R. In the example of Fig. 7, the disposition region R includes "ground" and "grass", but the occupancy rate of "ground" is higher. Therefore, in a case of the example of Fig. 7, the environment of the disposition region R is determined to be "ground".

The second element determination unit 114D determines, as a second element of the AR object to be caused to appear, the display form of the AR object. The second element determination unit 114D determines the display form of the AR object based on the information related to the behavior history of the user acquired by the behavior history information acquisition unit 112. In the present embodiment, the display form of the AR object is determined based on the information on the location history. In the present embodiment, the display form is determined depending on whether or not the place is a place that the user visits for the first time. That is, the display form is determined depending on whether or not the current position of the mobile terminal 10 (current position of the user) is a place existing in the location history. In a case of a place that the user visits for the first time (in a case of a unvisited place), the second element determination unit 114D sets the display form of the AR object to a first display form. In this case, the current position does not exist in the location history. On the other hand, in a case in which the place is not the place that the user visits for the first time (in a case of the previously visited place), the second element determination unit 114D sets the display form of the AR object to a second display form. In this case, the current position exists in the location history.

Fig. 9 is a diagram showing an example of the display form of the AR object.

In the present embodiment, the number of AR objects ARO to be caused to appear is set as the display form of the AR object. A larger number of AR objects ARO are set to be displayed in the second display form than in the first display form.

It should be noted that, in Fig. 9, for convenience, each AR object ARO is displayed in two dimensions, but each AR object ARO is formed by 3DCG. In Fig. 9, the AR object ARO is displayed in a stationary state, but the AR object ARO can also be configured to move.

The AR image generation unit 115 generates the augmented reality image (AR image) in which the AR object is superimposed on the image (captured image) captured by the camera unit 18. The AR image generation unit 115 superimposes the AR object determined by the AR object determination unit 114 on the captured image I, to generate the AR image. In this case, the AR image generation unit 115 disposes the AR object in the disposition region determined by the disposition region determination unit 114B, to generate the AR image. In addition, the AR image generation unit 115 generates the AR image by displaying the AR object determined by the first element determination unit 114C in the display form determined by the second element determination unit 114D (the AR image is generated by superimposing the three-dimensional CG of the display form determined by the second element determination unit 114D). In the present embodiment, the captured image is an example of a first image, and the AR image is an example of a second image. Further, the AR object is an example of an object.

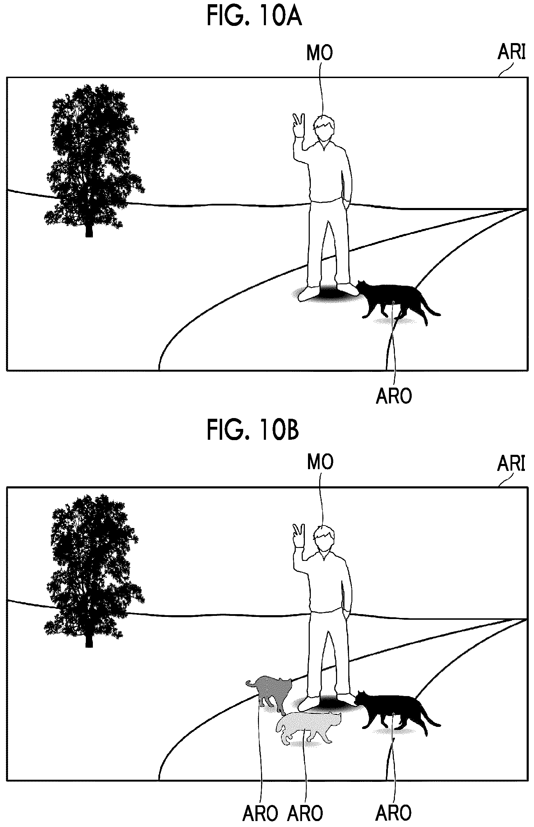

Figs. 10A and 10B are diagrams showing an example of the AR image. Fig. 10A shows an example of a case in which displaying is performed in the first display form. Fig. 10B shows an example of a case in which displaying is performed in the second display form.

As shown in Figs. 10A and 10B, in the present embodiment, the AR image ARI is generated in which the AR object ARO is superimposed on the region around the main subject MO and the ground region.

The display control unit 116 controls displaying of the image on the display 15. The display control unit 116 displays the AR image ARI generated by the AR image generation unit 115 on the display 15 (see Fig. 1).

The recording control unit 117 controls recording of the image in the internal memory 14. The recording control unit 117 records the image being displayed on the display 15 in the internal memory 14 in response to a recording instruction (still image or moving image capturing instruction) from the user. The recording instruction is issued by, for example, a touch operation on a shutter button SSB (see Fig. 1) displayed on the display 15.

### [Operation of Mobile Terminal (Information Processing Method)]

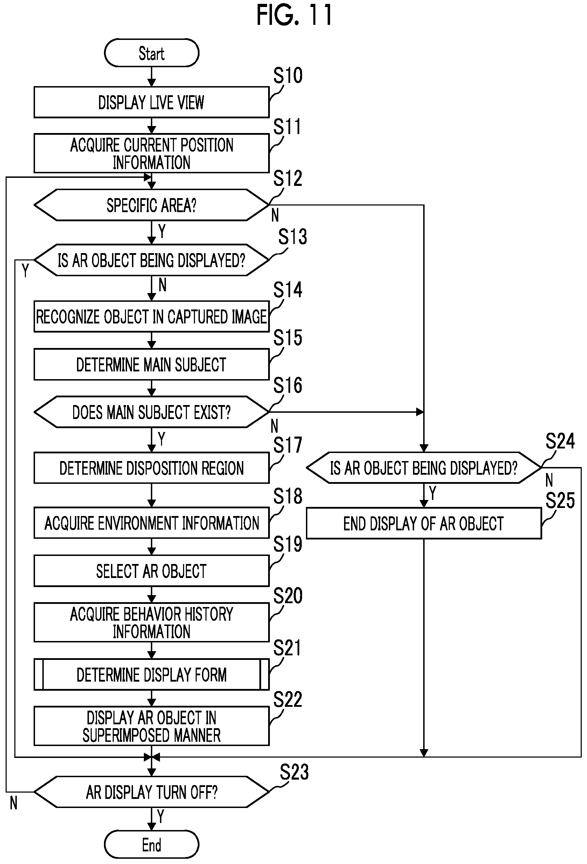

Fig. 11 is a flowchart showing an operation procedure of the mobile terminal in a case of performing the AR display.

First, the live view image is displayed on the display 15 (step S10). The live view is to display the image captured by the image sensor of the camera unit 18 in real time (immediately).

Next, the information on the current position of the mobile terminal 10 (current position of the user) is acquired (step S11). The mobile terminal 10 acquires the information on the current position of the mobile terminal 10 based on the GPS signal received by the GPS reception unit 17.

Next, it is determined whether or not the current position is a specific area defined in the map database 121 based on the acquired information on the current position (step S12). More specifically, it is determined whether or not the current position is the place existing in the map database 121.

In a case in which the current position is a specific area defined in the map database 121, it is determined whether or not the AR object is displayed on the live view image being displayed on the display 15 (step S13).

In a case in which the AR object is not displayed, processing of recognizing the object from the captured image is performed (step S14). The "captured image" here is an image to be displayed as the live view.

The main subject is determined from the captured image based on the result of recognition of the object (step S15). In the present embodiment, the human is the main subject. Therefore, the human is specified as the main subject from the recognized object. In a case in which a plurality of humans are included in the image, the main subject is specified in accordance with a predetermined determination criterion.

Whether or not the main subject exists is determined based on the result of determination processing of the main subject (step S16). That is, it is determined whether or not the main subject exists in the captured image.

In a case in which the main subject exists in the captured image, the disposition region of the AR object is determined based on the position of the main subject in the image (step S17). In the present embodiment, the region around the main subject and the ground region are set as the disposition region of the AR object.

After the disposition region of the AR object is determined, the environment information on the disposition region is acquired (step S18). In the present embodiment, the information on the object in the disposition region of the AR object is acquired based on the result of recognition of the object.

The AR object to be caused to appear in the image is selected based on the acquired information on the object in the disposition region (step S19). That is, it is determined which type of AR object is to be caused to appear. The AR object is selected from the AR object database 123.

In a case in which the AR object to be caused to appear is determined, the information on the behavior history of the user is acquired (step S20). In the present embodiment, the information on the location history is acquired.

The display form of the AR object is determined based on the acquired information on the location history (step S21). In the present embodiment, the display form of the AR object is determined depending on whether or not the current position (current position of the user) of the mobile terminal 10 is the unvisited place.

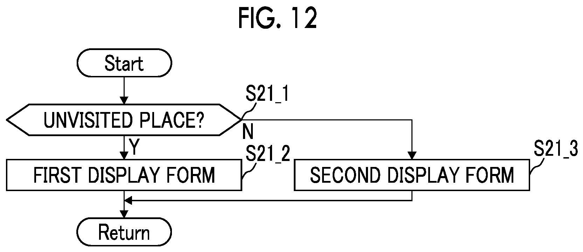

Fig. 12 is a flowchart showing a procedure of processing of determining the display form of the AR object.

First, it is determined whether or not the current position is an unvisited place (step S21_1). That is, it is determined whether or not the current position exists in the location history.

In a case in which the current position is the unvisited place, the display form of the AR object is set to the first display form (step S21_2). A case of the unvisited place is a case in which the current position does not exist in the location history.

On the other hand, in a case in which the current position is not the unvisited place, that is, the previously visited place, the display form of the AR object is set to the second display form (step S21_3). A case of the previously visited place is a case in which the current position exists in the location history.

In this way, the display form of the AR object is determined depending on whether or not the current position is the unvisited place.

In the above-described series of processing, the type, the disposition region, and the display form of the AR object to be caused to appear in the live view image are determined. The AR object is combined with the live view image in accordance with the determined matters, and the AR image is generated.

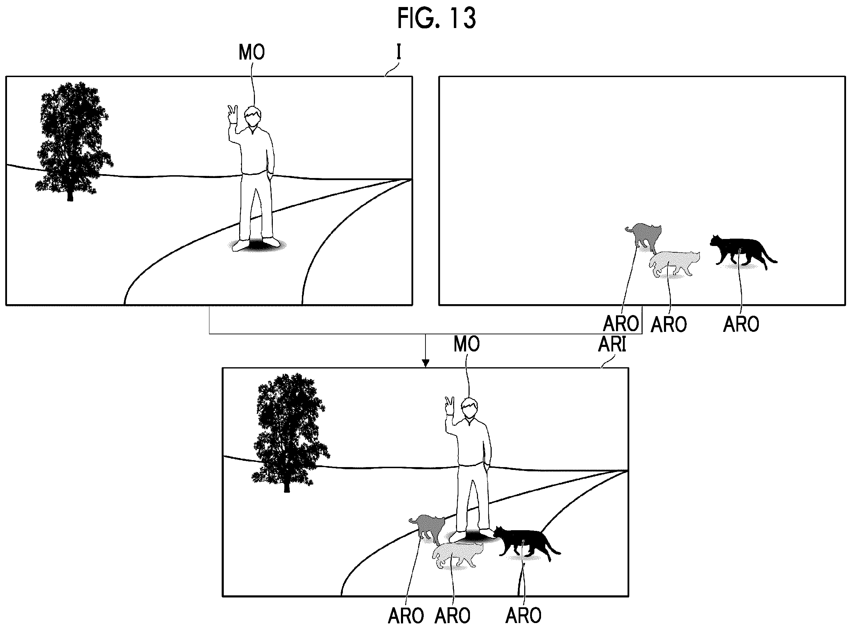

Fig. 13 is a conceptual diagram of the generation of the AR image.

As shown in Fig. 13, the AR image ARI is generated by superimposing the AR object ARO on a predetermined region of the captured image I (live view image). In the present embodiment, the predetermined region is the region around the main subject MO and the ground region.

The generated AR image is displayed on the display 15. That is, the image on which the AR object is superimposed is displayed on the display 15 (step S22). As a result, it is possible to view the AR image ARI.

Thereafter, it is determined whether or not the user has issued an instruction to turn off the AR display (step S23). In step S13, similarly, it is determined whether or not the user has issued the instruction to turn off the AR display in a case in which it is determined that the AR object is being displayed (step S23).

In a case in which the instruction to turn off the AR display is issued, the processing of the AR display ends. The instruction to turn off the AR display is issued by a predetermined operation.

In step S12, in a case in which it is determined that the current position is not the specific area defined in the map database 121, it is determined whether or not the AR object is being displayed (step S24). That is, it is determined whether or not the AR object is displayed on the live view image being displayed on the display 15. In a case in which it is determined that the AR object is being displayed, displaying the AR object ends (step S25). That is, in this case, since the user moves from the specific area, displaying the AR object is turned off. Thereafter, it is determined whether or not the user has issued the instruction to turn off the AR display (step S23), and in a case in which the instruction to turn off the AR display is issued, the processing of the AR display ends.

In step S16, even in a case in which it is determined that the main subject does not exist in the captured image, it is determined whether or not the AR object is being displayed (step S24). In a case in which it is determined that the AR object is being displayed, displaying the AR object ends (step S25). That is, in this case, since the main subject disappears from the captured image, displaying the AR object is also turned off. Thereafter, it is determined whether or not the user has issued the instruction to turn off the AR display (step S23), and in a case in which the instruction to turn off the AR display is issued, the processing of the AR display ends.

It should be noted that the AR object that is once displayed may be automatically removed after a certain period of time.

As described above, according to the present embodiment, the type and the display form of the AR object to be caused to appear are determined based on the information on the environment of the space in which the AR object is disposed and the information on the behavior history of the user. As a result, it is possible to provide the AR space having excellent interestingness.

### [Modification Example]

### [Method of Determining Type of AR Object]

In the above-described embodiment, the configuration is adopted in which the type of the AR object to be caused to appear is determined based on the result of recognition of the object in the disposition region of the AR object, but the method of determining the type of the AR object to be caused to appear is not limited to this. The type of the AR object to be caused to appear can be determined based on various types of information which can be acquired by the mobile terminal 10.

For example, a configuration can be adopted in which the type of the AR object to be caused to appear is determined based on the information on the current position of the mobile terminal 10 (current position of the user). In this case, the information on each AR object is recorded in the AR object database 123 in association with the information on the area or the place.

In addition, a configuration can be adopted in which the type of the AR object to be caused to appear is determined based on the current position of the mobile terminal 10 (current position of the user) and the information on the object recognized from the captured image. In this case, for example, a configuration can be adopted in which a first classification of the AR object to be caused to appear is determined based on the information on the current position of the mobile terminal 10, and a second classification of the AR object to be caused to appear is determined based on the information on the object recognized from the captured image. The first classification is a so-called major classification, and the second classification is a classification (so-called minor classification) obtained by sub-dividing the first classification.

In addition, a configuration can also be adopted in which, instead of the recognition of the object or together with the recognition of the object, the recognition of the scene is performed to determine the type of the AR object to be caused to appear based on the recognized scene or based on the recognized scene and object. It should be noted that the scene recognition itself is a known technology, and thus the detailed description thereof will be omitted. For example, a configuration can be adopted in which the scene recognition of the captured image is performed by using a trained model that has been trained through machine learning to perform the scene recognition from the image.

Further, in a case in which the mobile terminal 10 can acquire information such as a current date and time, a temperature, a humidity, and a voice, the mobile terminal 10 may acquire these types of information as the environment information, to determine the type of the AR object to be caused to appear based on the acquired information.

In addition, the type of the AR object to be caused to appear may be determined by taking the information on the behavior history of the user into account. That is, the type of the AR object to be caused to appear may be determined by using both the environment information and the information on the behavior history of the user.

### [Method of Determining Display Form of AR Object]

In the above-described embodiment, the configuration is adopted in which the information on the location history is used as the information on the behavior history of the user to determine the display form of the AR object, but the information on the behavior history used in determining the display form of the AR object is not limited to this. Various types of information which can be acquired by the mobile terminal 10 can be used. For example, information on a usage history of the main function (AR display function) on the mobile terminal 10, information on an operation history of the user in the main function, and the like can be used. The usage history includes various types of information related to use, such as information on the total number of times of use, information on the total time of use, information on the number of times of use per day, information on the time of use per day, information on the time zone of use, and information on the number of times of display of each AR object. The information on the number of times of display of each AR object is information on the number of times of appearance of each AR object (how many times each AR object is caused to appear). The information on the operation history includes information on an imaging history of a still image and a moving image, a printing history, and the like. The imaging history also includes the information on the usage history of the camera unit 18. That is, the information includes information on whether the inward-facing camera unit 18A or the outward-facing camera unit 18B is used. The printing history is a history of printing (printing on a tangible object such as a film, paper, or a medium) on the captured image. The form of the printing is not particularly limited. In addition, it is also possible to use information on a usage history, an operation history, and the like of the mobile terminal itself. The information on the usage history of the mobile terminal itself includes, for example, information on an imaging history using the mobile terminal 10. In addition, the imaging history can include information on a result of analysis of the captured image. The result of analysis of the captured image can include information on a result of image recognition performed on the captured image (for example, a result of recognition of the subject, a result of recognition of the scene, and the like).

The information on the behavior history to be used may be limited to information related to a specific event. For example, the information can be limited to only the information related to the current position. For example, the number of times of imaging can be limited to the number of times of imaging in a specific area (the number of times of imaging in the current area). The number of times of printing can be limited to the number of times of printing in a specific area (for example, the number of times of printing in the current area) or the number of times of printing of a specific subject (for example, a subject related to the current area).

The behavior history of the user can also include a purchase history of a product, a posting history on a social networking service (SNS), and the like. Regarding the purchase history of the product, for example, information on whether or not a specific product in the area(for example, a local specialty product of the area, a limited product sold only in the area, or the like) has been purchased, information on the number of purchases, and the like, which are related to the current position, can be used. In addition, for the posting history on the SNS, information on whether or not the information related to the current position is posted, the number of posts, and the like can be used.

The display form of the AR object to be caused to appear can be determined by using these type of information on the history related to the behavior of the user in a composite manner.

Further, the display form of the AR object to be caused to appear may be determined by taking the environment information into account. That is, the display form of the AR object to be caused to appear may be determined by using both the environment information and the information on the behavior history of the user.

In addition, a configuration may be adopted in which a lottery draw, a game, or the like is performed in a case in which the behavior history satisfies a certain condition, and the display form of the AR object is determined in accordance with a result thereof.

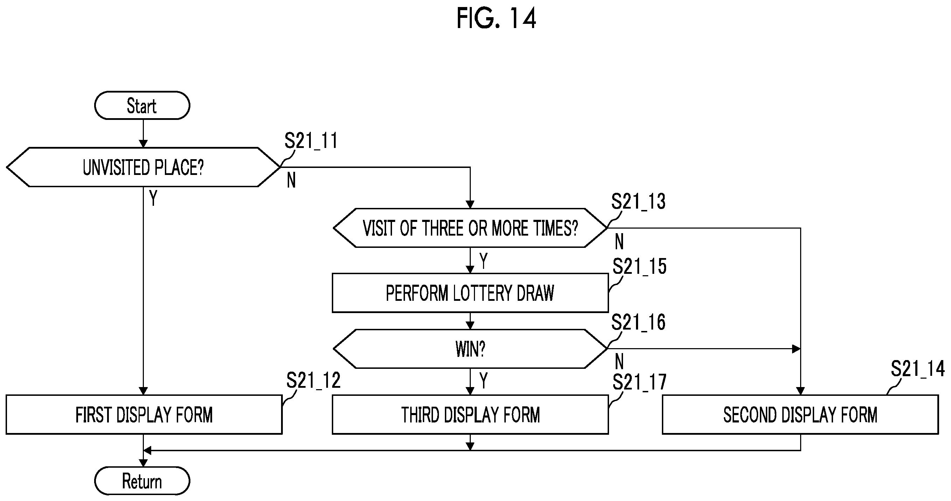

Fig. 14 is a flowchart showing an example of a processing procedure in a case in which the display form of the AR object is determined by performing the lottery draw.

First, it is determined whether or not the current position is the unvisited place (step S21_11). In a case in which the current position is the unvisited place, the display form of the AR object is set to the first display form (step S21_2).

In a case in which the current position is not the unvisited place (in a case of the previously visited place), it is determined whether or not the place has been visited three or more times (step S21_13). That is, it is determined whether or not the current visit is the third or subsequent visit.

In a case in which the visit is not the third or subsequent times (in a case of the second visit), the display form of the AR object is set to the second display form (step S21_14).

On the other hand, in a case of the third or subsequent visit, the lottery draw is performed (step S21_15).

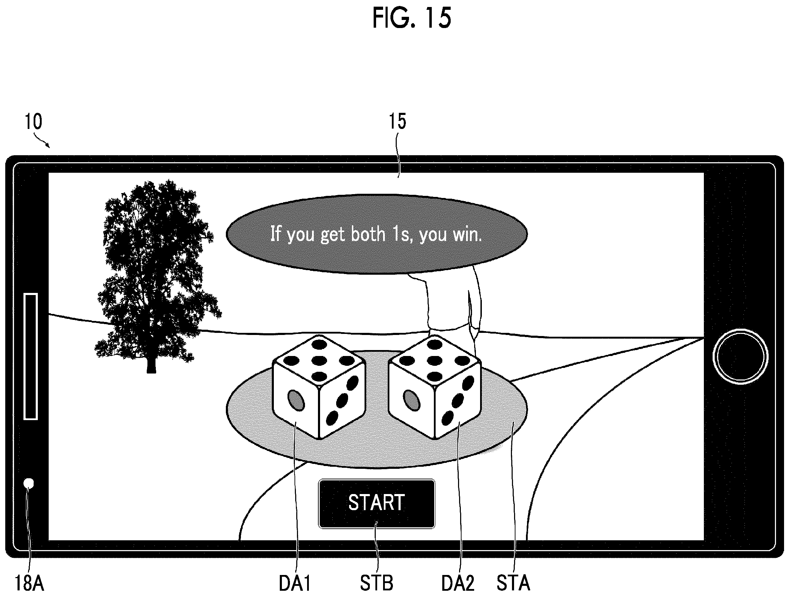

Fig. 15 is a diagram showing an example of a lottery draw screen.

Fig. 15 is an example of the lottery draw using the dice. In a case in which two dice are used and both dice show 1, the result is determined as "win".

As shown in Fig. 15, a disk-shaped stage image STA is displayed to be superimposed on the live view image, and images DA1 and DA2 of two dice are displayed on the stage image STA. A start button STB is displayed on the screen.

The user touches the start button STB to issue an instruction of the execution of the lottery draw. In a case in which the instruction of the execution of the lottery draw is issued, an animation image in which the dice rotate is displayed. In addition, at the same time, the display of the start button STB is switched to the display of a stop button (not shown). The user touches the stop button to issue an instruction of the stop of the rotation of the dice. In a case in which the instruction to stop the rotation is issued, an image is switched to an image in which the dice are stopped, and the result is confirmed. The eyes of each die are randomly determined. For example, a random number is acquired in a range of numerical values from 1 to 6, and thus the result of each die is determined.

As described above, in a case in which both the two dice are 1, the result is determined as "win", and otherwise, the result is determined as "lose".

In a case in which the lottery draw is performed, it is determined whether or not the result of lottery draw is a win (step S21_16). In a case in which the result of lottery draw is "win", the display form of the AR object is set to a third display form (step S21_17). On the other hand, in a case in which the result of lottery draw is "loss", the display form of the AR object is set to the second display form (step S21_17).

Here, the second display form is set such that the number of AR objects to be displayed is larger than in the first display form, and the third display form is set such that the number of AR objects to be displayed is larger than in the second display form.

In this way, by incorporating the random element in a case of determining the display form, it is possible to further enhance the interestingness.

It should be noted that the randomness can be completely random or random with a bias. For example, in a case in which a specific condition is satisfied, the randomness may be controlled to obtain an advantageous result. For example, the result may vary depending on the usage status of the user (for example, whether or not charging is performed), the number of past appearances of the AR object to be caused to appear and the number of times of imaging, the number of times of printing, and the like.

### [Display Form of AR Object]

In the above-described embodiment, the number of AR objects to be caused to appear is changed in accordance with the behavior history of the user, but the element to be changed is not limited to this. A configuration can be adopted in which a so-called gorgeousness, luxury, or the like is changed. That is, a configuration can be adopted in which the grade of the appearance is changed. For example, in a case in which the display form of the AR object is changed based on the location history, the display (for example, a more gorgeous display, a more luxurious display, or the like) in which the grade of the appearance is higher as the number of times of visit is increased can be used. In addition, for example, in a case in which the display form of the AR object is changed based on the number of times of imaging of the still image, the appearance grade can be increased as the number of times of imaging increases. In addition, for example, in a case in which the display form of the AR object is changed based on the number of times of display (number of times of appearance), the display form can be set such that the grade of appearance is higher as the number of times of display is increased.

In addition, in the above-described embodiment, the configuration is adopted in which the two display forms are switched, but a plurality of display forms may be prepared, and the display form may be switched in more detail in accordance with the behavior history of the user.

### [Change of Display Form Based on Specific Behavior]

In a case in which the user performs specific behavior, the display form of the AR object may be further changed. For example, in a case in which the user captures an image in which the AR object is displayed, the display form of the AR object may be further changed. The imaging includes both capturing a still image and capturing a moving image. In addition, in a case in which the captured image is printed, the display form of the AR object may be further changed. In this case, as an aspect of the change, it is possible to further increase the number of AR objects, further increase the grade of the appearance, and the like. The instruction to capture the still image or the moving image and the instruction to print the captured image are examples of an instruction to output the second image. It should be noted that the imaging includes acquiring the content displayed on the screen of the display 15 as it is as image data (so-called screenshot or screen capture).

### [Disposition Region of AR Object]

In the above-described embodiment, the main subject (human) is recognized, and the region around the main subject and the ground region is set as the disposition region of the AR object, but the method of determining the disposition region of the AR object is not limited to this. It is preferable to set the disposition region depending on the type of the AR object to be caused to appear. For example, the AR object that is not unnatural to be floating in the air does not always need to be disposed on the ground. A configuration can also be adopted in which the AR object is disposed in the air, on a water surface, or the like, depending on the type of the AR object and the like. Similarly, the AR object (confetti, star sparkle, or the like) as the presentment does not always need to be disposed on the ground.

In addition, the camera does not always need to be disposed around the main subject, and may be disposed at a specific place in the screen. For example, a configuration may be adopted in which the AR object is disposed at the center of the screen. In this case, the recognition of the main subject is not required.

In addition, in a case in which the mobile terminal 10 has a space recognition function, it is preferable to determine the disposition region by using a result of recognition. For example, in a case in which the mobile terminal 10 has a range measurement sensor such as LiDAR, the disposition region can be determined by using a result of range measurement.

### [Second Embodiment]

In the present embodiment, a case will be described in which a character (a human, an animal, a doll, a robot, or the like appearing in a novel, a movie, a play, a comic book, a computer game, or the like) created by CG is superimposed on the captured image to generate the AR image.

In the present embodiment, the type and the attribute of the character to be caused to appear in the image are determined based on the environment information and the behavior history information. More specifically, the type of the character is determined based on the environment information, and the attribute of the character is determined based on the behavior history information. The attribute includes not only an external element (so-called appearance) such as physical appearance, clothing, decoration, equipment, growth degree, and evolution degree of the character but also an element other than the appearance, such as intimacy degree, personality, and status. For example, in a case of a character with which a conversation is performed, a conversation content, a motion, and the like are changed depending on the intimacy degree, the personality, and the like.

In the present embodiment as well, as an example, a case will be described in which the AR display is performed by using the mobile terminal. The basic configuration of the mobile terminal is the same as the basic configuration of the first embodiment. Therefore, here, only a difference therebetween, that is, the AR object (character) to be caused to appear and the method of determining the AR object will be described.

It should be noted that, in the present embodiment, a case in which the appearance element is changed will be described as an example of the attribute of the character.

### [AR Object and Method of Determining AR Object]

As described above, in the present embodiment, the AR image in which the character is caused to appear is generated. The character (AR object) to be caused to appear is formed by, for example, 3DCG, and the data thereof is recorded in the AR object database 123. The character (AR object) is selected by the AR object determination unit 114.

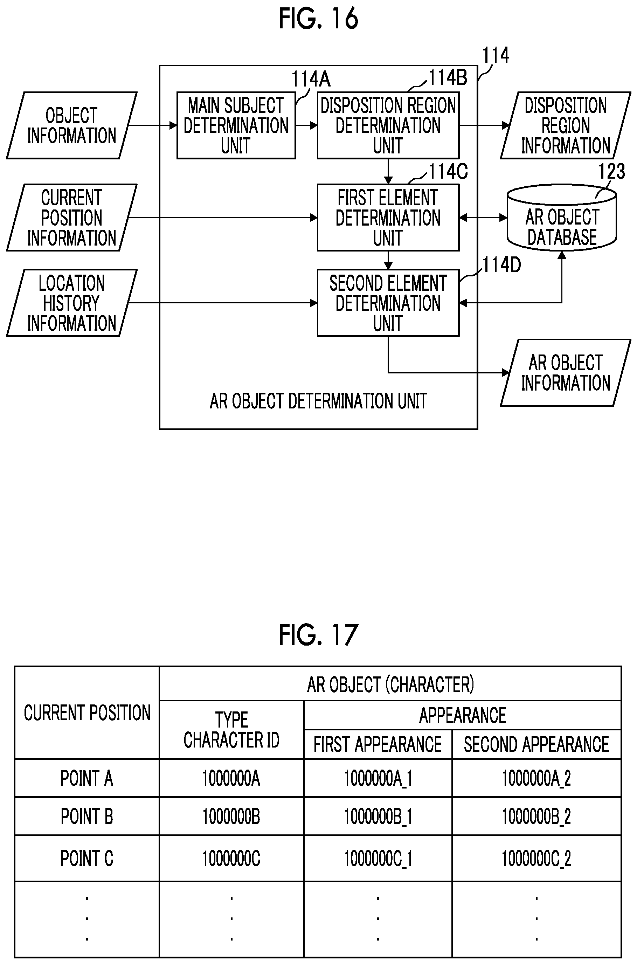

Fig. 16 is a block diagram of main functions of the AR object determination unit.

The AR object determination unit 114 has functions of a main subject determination unit 114A, a disposition region determination unit 114B, a first element determination unit 114C, a second element determination unit 114D, and the like.

The functions of the main subject determination unit 114A and the disposition region determination unit 114B are the same as the functions in the first embodiment. The main subject determination unit 114A determines the main subject based on the result of recognition (object information) of the object recognition unit 111B. The disposition region determination unit 114B determines the disposition region of the character based on the result of determination of the main subject by the main subject determination unit 114A.

The first element determination unit 114C determines the type of the character as the first element based on the information on the current position (current position information) of the mobile terminal 10. The current position of the mobile terminal 10 is determined by the position determination unit 111A. The first element determination unit 114C refers to the information recorded in the AR object database 123, to determine the type of the character.

Fig. 17 is a diagram showing an example of the information recorded in the AR object database.

As shown in Fig. 17, the AR object database 123 records information on a character to be caused to appear for each specific point on the map. A point registered in the map database 121 is used as the point on the map.

A character identification (ID) as identification information is added to each character, and information (data of 3DCG) on the appearance is recorded in association with the character ID.

The first element determination unit 114C selects a character corresponding to the current position of the mobile terminal 10 (current position of the user) from among the plurality of characters recorded in the AR object database 123. For example, according to the example of Fig. 17, in a case in which the current position is a point A, the character of the character ID: 1000000A is selected.

The second element determination unit 114D determines the appearance of the character based on the information on the behavior history of the user acquired by the behavior history information acquisition unit 112. As in the first embodiment, the second element determination unit 114D determines the appearance of the character based on the information on the location history of the user. Accordingly, the appearance is determined depending on whether or not the place is a place that the user visits for the first time. In a case of a place that the user visits for the first time (in a case of the unvisited place), the second element determination unit 114D sets the appearance of the character to a first appearance. On the other hand, in a case in which the place is not the place that the user visits for the first time (in a case of the previously visited place), the second element determination unit 114D sets the appearance of the character to the second appearance.

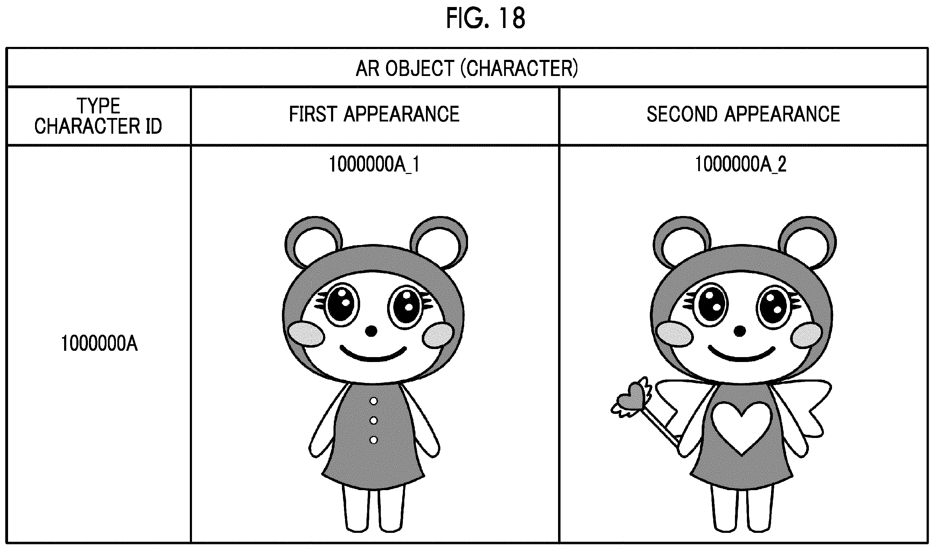

Fig. 18 is a diagram showing an example of the appearance of the character.

As shown in Fig. 18, the first appearance and the second appearance are different from each other. A higher grade of appearance is set to the second appearance than to the first appearance. That is, the appearance becomes more gorgeous and more luxurious. In the example of Fig. 18, the clothing (clothes), the decoration, and the equipment are changed. In addition, settings in which the decoration, the equipment, the growth degree, the evolution degree, and the like are changed can also be made.

### [Operation of Mobile Terminal]

The processing procedure in a case of performing the AR display is approximately the same as that of the first embodiment. Therefore, here, the processing procedure in a case of performing the AR display will be described with reference to Fig. 11.

First, the live view image is displayed on the display 15 (step S10). Then, the information on the current position is acquired (step S11). The mobile terminal 10 acquires the information on the current position of the mobile terminal 10 (current position of the user) based on the GPS signal received by the GPS reception unit 17. Next, it is determined whether or not the current position is a specific area defined in the map database 121 based on the acquired information on the current position (step S12). In a case in which the current position is a specific area defined in the map database 121, it is determined whether or not the AR object is displayed on the live view image being displayed on the display 15 (step S13). In a case in which the AR object is not displayed, processing of recognizing the object from the captured image is performed (step S14). The main subject is determined from the captured image based on the result of recognition of the object (step S15). In the present embodiment as well, the human is the main subject. Whether or not the main subject exists is determined based on the result of determination processing of the main subject (step S16). That is, it is determined whether or not the main subject exists in the captured image. In a case in which the main subject exists in the captured image, the disposition region of the character (AR object) is determined based on the position of the main subject in the image (step S17). In the present embodiment as well, the region around the main subject and the ground region are set as the disposition region of the character.

After the disposition region of the AR object is determined, the environment information is acquired (step S18). In the present embodiment, the information on the current position of the mobile terminal 10 (current position of the user) is acquired as the environment information. The current position of the mobile terminal 10 is determined by the position determination unit 111A based on the GPS signal received by the GPS reception unit 17.

The type of the character (AR object) to be caused to appear is selected based on the acquired information on the current position (step S19). The type of the character to be caused to appear is selected from the AR object database 123.

In a case in which the character to be caused to appear is determined, the information on the behavior history of the user is acquired (step S20). In the present embodiment as well, the information on the location history is also acquired as the information on the behavior history. The display form of the character (AR object) is determined based on the acquired information on the location history (step S21). In the present embodiment as well, the display form of the character to be caused to appear is determined depending on whether or not the current position is the unvisited place.

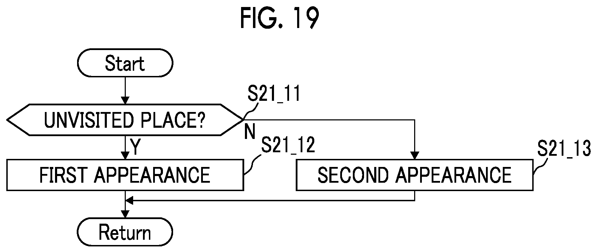

Fig. 19 is a flowchart showing a procedure of processing of determining the appearance of the character.

First, it is determined whether or not the current position is the unvisited place (step S21_11). That is, it is determined whether or not the current position exists in the location history.

In a case in which the current position is the unvisited place, the appearance of the character to be caused to appear is set to the first appearance (step S21_12).

On the other hand, in a case in which the current position is not the unvisited place, that is, the previously visited place, the appearance of the character to be caused to appear is set to the second appearance (step S21_13).

In this way, the appearance of the character to be caused to appear is determined depending on whether or not the current position is the unvisited place.

In the above-described series of processing, the type, the disposition region, and the appearance of the character (AR object) to be caused to appear in the image are determined. The character is combined with the live view image in accordance with the determined matters, and the AR image is generated. That is, the character is superimposed and displayed in a predetermined region of the captured image (live view image), and the AR image is generated. In the present embodiment, the predetermined region is the region around the main subject and the ground region.

The generated AR image is displayed on the display 15. That is, an image in which the character (AR object) appears is displayed on the display 15 (step S22). As a result, it is possible to view the AR image.

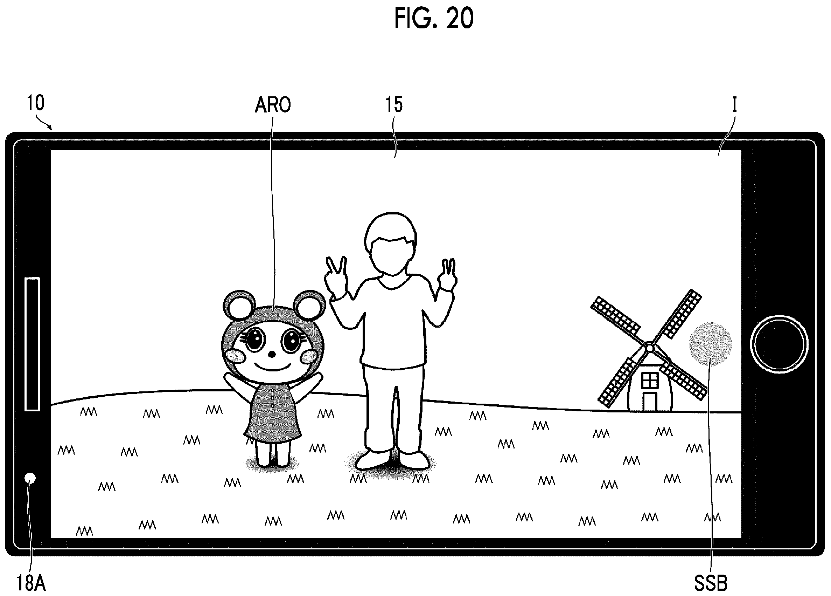

Fig. 20 is a diagram showing an example of the AR display.

As shown in Fig. 20, a character (AR object) ARO formed by 3DCG is superimposed and displayed in a predetermined region of the captured image I (live view image).

As described above, according to the present embodiment, in a case of generating the AR image in which the character is caused to appear, the type and the attribute of the character to be caused to appear are determined based on the information on the environment of the space in which the character is disposed and the information on the behavior history of the user. As a result, it is possible to provide the AR space having excellent interestingness.

### [Modification Example]

### [Method of Determining Type of Character]

In the above-described embodiment, the type of the character (AR object) to be caused to appear is determined by using the information on the current position of the mobile terminal 10 (current position of the user) as the environment information, but the type of the character may be determined by using other information. For example, as in the first embodiment, the type of the character may be determined based on the information on the result of recognition of the object in the disposition region of the character. In addition, an imaging scene may be recognized to determine the type of the character to be caused to appear, based on the recognized scene. Further, the type of the character to be caused to appear may be determined by taking the information on the behavior history into account.

### [Method of Determining Appearance of Character]

In the above-described embodiment, the appearance of the character is determined by using the information on the location history as the information on the behavior history of the user, but the appearance of the character may be determined by using other information. Various types of information which can be acquired by the mobile terminal 10 can be used. Therefore, a result of environment recognition (environment information) can also be used. This point is the same as the point at which the display form of the AR object can be determined by using various types of information. Therefore, a configuration may be adopted in which a lottery draw, a game, or the like is performed in a case in which the behavior history satisfies a certain condition, and the appearance of the character is determined in accordance with the result.

### [Change of Appearance Based on Specific Behavior]

In a case in which the user performs the specific behavior, the appearance of the character may be further changed. For example, in a case in which the user captures the image (captures the moving image) in which the character is displayed, the appearance of the character may be further changed. In addition, in a case in which the captured image is printed, the appearance of the character may be further changed. In such a case, the appearance may be changed to a randomly selected appearance. As a result, the interestingness can be further improved.

In addition, in a case in which the user performs the specific behavior, the character may perform a specific motion. For example, in a case in which the user captures the image (captures the moving image) in which the character is displayed, the character may perform the specific motion. In addition, in a case in which the captured image is printed, the character may perform the specific motion.

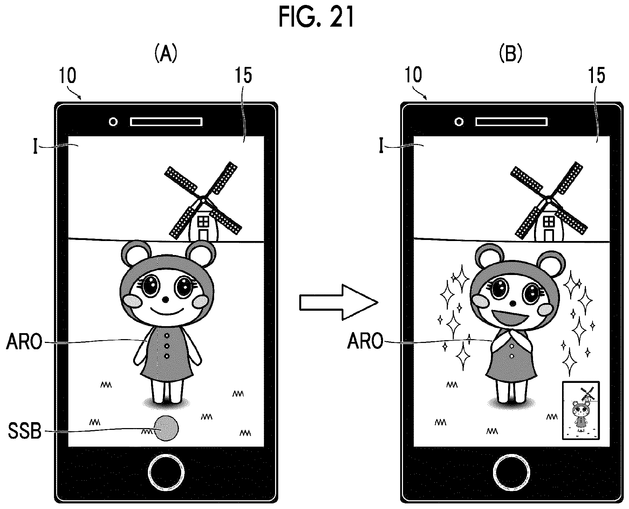

Fig. 21 is a diagram showing an example of a case in which the character performs the specific motion by imaging.

(A) of Fig. 21 shows display before imaging, and (B) of Fig. 21 shows display after imaging. As shown in Fig. 21, the character (AR object) ARO performs behavior indicating joy by capturing the still image. As described above, for example, the motion indicating joy can be described as the specific motion. In addition, a motion of prompting printing (motion of requesting printing) may be performed. In addition, the randomly selected motion may be performed. As a result, the interestingness can be further improved.

Such a motion is continuously performed for a predetermined time. The display returns to the normal display after a predetermined time has elapsed.

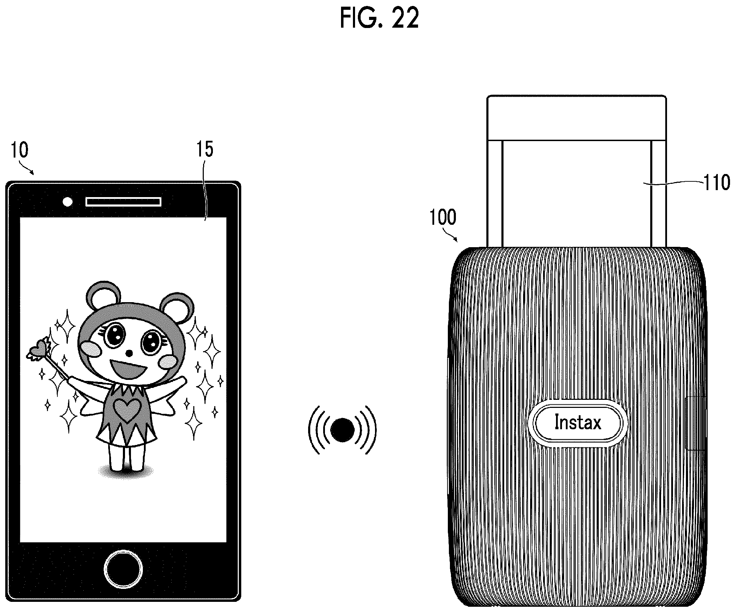

Fig. 22 is a diagram showing an example of display in a case of the printing.

Fig. 22 shows an example of a case in which the printing is performed by a so-called mobile printer. In particular, an example of a case in which a printer 100 (so-called instant printer) that prints an image on an instant film 110 is used is shown. The printer 100 and the mobile terminal 10 perform wireless communication using WiFi (registered trademark), Bluetooth (registered trademark), and the like to transmit and receive data. It should be noted that the printer 100 and the printing method are known, and thus the detailed description thereof will be omitted.

As shown in Fig. 22, in a case in which the printing is performed, an image of the printed character is displayed on the display 15, and a predetermined motion is performed. This motion is continuously performed for a predetermined time. For example, the motion is performed until the transmission of the data for printing to the printer is completed.

### [Attribute of Character]

In the above-described embodiment, the appearance of the character is changed in accordance with the behavior history of the user, but the element to be changed is not limited to this. As described above, the attribute includes not only the appearance elements such as the physical appearance, the clothing, the decoration, the equipment, the growth degree, and the evolution degree of the character, but also elements other than the appearance, such as the intimacy degree, the personality, and the status. For example, a configuration can be adopted in which the intimacy degree is improved in accordance with the behavior history.

It is preferable to record the history of change for the attribute of the character. As a result, the attribute can be changed in a stepwise manner. For example, in a case in which the attribute is changed based on the location history, even in a case of visiting the same place, the attribute can be changed in a stepwise manner depending on the number of times of visit, such as a first attribute for the first visit, a second attribute for the second visit, and a third attribute for the third visit.

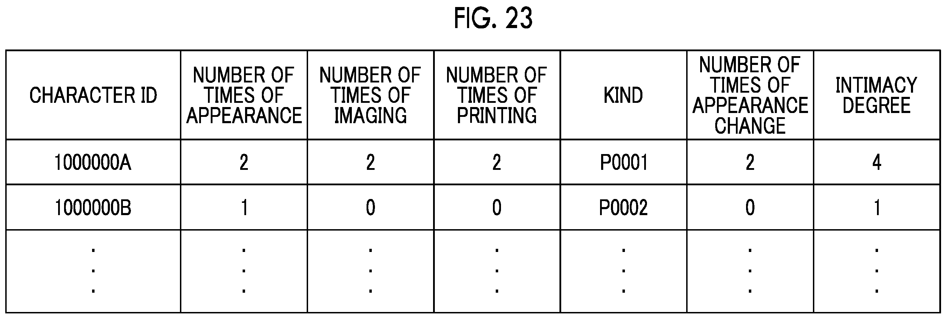

Fig. 23 is a diagram showing an example of history data of the attribute change of the character.

As shown in Fig. 23, each character is managed by a character ID, and the number of times of appearance, the number of times of imaging, the number of times of printing, the kind, the number of times of change of appearance, the intimacy degree, and the like are individually recorded. The number of times of appearance is the number of times the character is caused to appear (the number of times the character is caused to appear). The number of times of imaging is the number of times the AR image in which the character appears is captured. The number of times of printing is the number of times the AR image in which the character appears is printed. The kind is a kind (type) of the character. The number of times of change of appearance is the number of times the appearance of the character is changed. The intimacy degree is an intimacy degree of the character. The intimacy degree is changed depending on, for example, the number of times of appearance, the appearance frequency (the number of times of appearance within a predetermined period), a period from the previous appearance, and the like.

The attribute of the character is changed based on the behavior history of the user. Therefore, the history of the change of the attribute of the character is also the behavior history of the user. Therefore, the attribute of the character can also be changed by using the information on the history of the change of the attribute of the character. The information on the history of the change of the attribute of the character is an example of information on a history of the object caused to appear. The information on the history of the change of the attribute of the character is recorded in a user database as, for example, user data. Alternatively, the information is recorded in the behavior history database.

Since the attribute of the character is changed depending on the way of involvement with the user or the interaction, the affection for the character is further strengthened, and the interestingness can be further improved. That is, as the number of times of appearance, the number of times of imaging, and the number of times of printing increase, the grade of the appearance is increased, growth or evolution occurs, and the intimacy degree is improved, so that the affection is increased.

### [Disposition Region of Character]

In the above-described embodiment, the region around the main subject and the ground region are set as the disposition region of the character, but the method of determining the disposition region of the character is not limited to this. As described in the modification example of the first embodiment, it is preferable to set the disposition region depending on the type of the character and the like. In addition, the disposition region of the character may be determined based on the information on the behavior history of the user. For example, in a case of determining the disposition region of the character based on the information on the location history of the user, the disposition region is determined as follows.

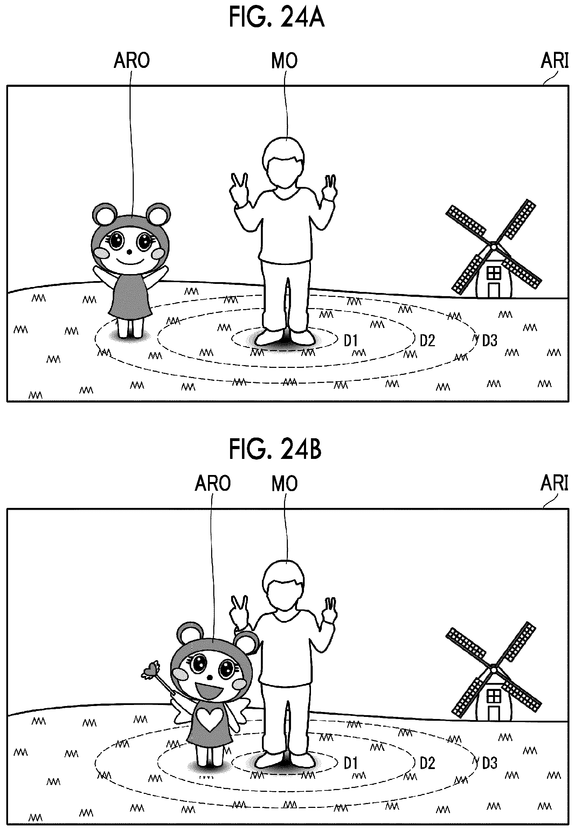

Figs. 24A and 24B are conceptual diagrams showing an example of the disposition of the character.

Fig. 24A shows an example of the AR image generated in a case in which the current position is the unvisited place. In addition, Fig. 24B shows an example of the AR image generated in a case in which the current visit place is the previously visited place.

As shown in Fig. 24A, in a case in which the current position is the previously visited place, the character (AR object) ARO is disposed in a region that is separated from the main subject MO by a distance of a distance D1 or more and less than a distance D2 (distance D1 < distance D2).

On the other hand, as shown in Fig. 24B, in a case in which the current position is an unvisited place, the character ARO is disposed in a region that is separated from the main subject MO by a distance of the distance D2 or more and less than a distance D3 (distance D2 < distance D3).

As described above, in a case in which the current position is the previously visited place, the character ARO is disposed closer to the main subject MO than in a case in which the current position is the unvisited place.

In addition, information such as the number of times of appearance, the number of times of imaging, the number of times of printing, and the intimacy degree of the characters to be caused to appear can also be used for determining the disposition region of the character. In this case, for example, the character is disposed closer to the main subject as the number of times of appearance increases, the number of times of imaging increases, and the number of times of printing increases, and the intimacy degree increases. These pieces of information may be used in combination, and the determination may be made by assigning weights to each item, and the disposition position may be determined.

In addition, image recognition (including object recognition) may be performed on the image in which the character is caused to appear, and the disposition region or the disposition position of the character may be determined by using the result. For example, in a case in which a specific subject (for example, a landmark, a monument, or the like) is recognized from the image, the disposition position of the character can be determined such that the character is disposed side by side with the specific subject. In addition, for example, in a case in which the specific subject is recognized from the image and the human is recognized, the disposition position of the character can be determined such that the specific subject is disposed between the character and the human.

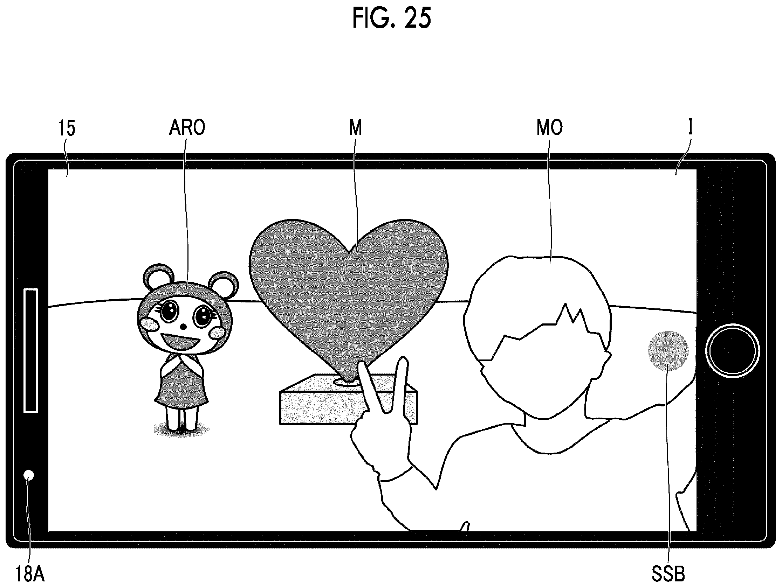

Fig. 25 is a conceptual diagram showing an example of the disposition of disposition character using disposition image recognition.

Fig. 25 shows an example of a case in which a self-portrait is taken by including a specific subject, here, a monument M within the screen. The self-portrait refers to an imaging method in which an imaging person himself/herself is a subject (selfie). In this case, the disposition position of the character ARO is determined such that the monument M is disposed between the imaging person (user) MO who is the main subject and the character (AR object) ARO.

A known image recognition technology can be adopted for the recognition of the specific subject. In addition, since the self-portrait is generally performed by using the inward-facing camera unit 18A, the determination of whether or not the imaging is the self-portrait may be performed based on whether or not the imaging is performed by the inward-facing camera unit 18A.

### [Other Embodiments]

### [Random Printing]

In a case of printing the image in which the AR object such as the character is displayed, the AR object may be printed by changing display of the AR object. The change may be made randomly. For example, in a case of printing the image in which the character is displayed, the image can be printed by randomly changing the expression, the posture, the clothing, and the like of the character. As a result, the interestingness of the printing can be further enhanced.

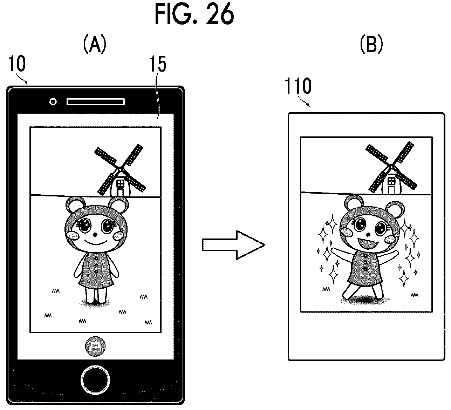

Fig. 26 is a conceptual diagram of the printing.

Fig. 26 shows an example of a case in which the image is printed on the instant film 110. (A) of Fig. 26 shows an image for which an instruction of the printing is issued. In (A) of Fig. 26, the image displayed on the display 15 of the mobile terminal 10 is the image for which the instruction of the printing is issued. (B) of Fig. 26 shows a result of the printing. The image for which the instruction of the printing is issued is printed with an expression, a posture, and decoration of the character that are changed.

Unlike simple display on the display, the printing has the pleasure of obtaining a unique image that cannot be altered. Therefore, in a case of the printing, the user can obtain a unique image that cannot be predicted by changing displaying the AR object, and the interestingness can be further improved. In addition, by making the change random, the interestingness can be further improved. A configuration can be adopted in which the random element is determined based on, for example, a time when the instruction of the printing is issued.

### [Extension to Cross Reality (XR)]

In the above-described embodiment, the case is described, as an example, in which the present invention is applied to processing in augmented reality (AR), but the application of the present invention is not limited to this. The present invention can also be applied to processing in mixed reality (MR), virtual reality (VR), and the like.

The MR is a technology that is more developed than the AR, and is a technology that can be operated or intervened by a physical behavior such as touching with a hand, by real-time synthesis of a virtual object (object) having a spatial spread at a specific position in a real space. The MR has a three-dimensional space recognition ability, and can fuse a virtual world having space information with the real world. In the MR, since a device recognizes space information by using a plurality of cameras, sensors, and the like and grasps the shape, the position information, and the like of the real world, the virtual world having the space information can be expressed in the real world. The MR is usually provided by using a dedicated head mounted display (HMD). In the MR as well, the information on the environment of the space in which the character is disposed can be acquired by using a camera and various sensors provided in the device (for example, the HMD).

In a case of VR, everything is provided by CG. Therefore, in such a case, the mobile terminal is also displayed in the virtual space as a virtual object using CG. The user operates the mobile terminal, which is the virtual object, via an avatar, which is a virtual representation of the user in the virtual space. In the virtual space, the position of the user is recognized as a position of the avatar. The space in which the object is caused to appear is recognized as a space captured by a mobile terminal used by the avatar in the virtual space.

In recent years, a digital twin that reproduces the real space in the virtual space has become a reality. Therefore, the present invention can be implemented even in the virtual space in which the real space is reproduced.

In addition, in a case of the VR, a space constituting a visual field region of the avatar may be set as the disposition space of the object, and an object to be caused to appear in the virtual space may be determined based on the information on the environment of the space and the information on the behavior history of the user. In this case, the information related to the environment is acquired from the image constituting the visual field region of the avatar. For example, information on an object in the image constituting the visual field region of the avatar is acquired. Further, the information on the position (coordinate position) of the avatar in the virtual space is acquired to acquire the information on the position of the user.

As described above, the present invention can be applied to a case in which an object is caused to appear in a virtual space (for example, a metaverse or the like), in addition to the real space.

### [System Configuration]

Although, in the above-described embodiment, the mobile terminal is configured to perform all the processing, a configuration may be adopted in which some processing is performed by another device. For example, a configuration may be adopted in which the server performs some processing. For example, the mobile terminal may be configured to perform only imaging, various types of sensing, and display of the AR image, and the server may perform the management of various databases, the generation of the AR image, and the like. In such a case, the form of communication between the mobile terminal and the server is not particularly limited.

In the above-described embodiment, the configuration is adopted in which all of the imaging of the image, the various types of sensing, and the display of the image are performed by the mobile terminal, but a configuration may be adopted in which each processing is performed by a separate device. For example, the display of the image may be performed by using an HMD.

### [Hardware Configuration]

The functions implemented by the information processing device are implemented by various processors. The various processors include a CPU and/or a graphic processing unit (GPU), which is a general-purpose processor that executes a program to function as the various processing units, a programmable logic device (PLD), which is a processor of which a circuit configuration can be changed after manufacture, such as a field programmable gate array (FPGA), and a dedicated electric circuit, which is a processor having a circuit configuration that is designed for exclusive use in order to perform specific processing, such as an application specific integrated circuit (ASIC). The program is synonymous with software.

One processing unit may be configured by one of these various processors or two or more processors of the same type or different types. For example, one processing unit may be configured by a plurality of FPGAs or a combination of a CPU and an FPGA. A plurality of processing units may be configured by one processor. As a first example in which the plurality of processing units are configured by one processor, there is a form in which one processor is configured by a combination of one or more CPUs and the software, and this processor functions as the plurality of processing units, as represented by a computer used in a client or a server. Second, as represented by a system on a chip (SoC) or the like, there is a form in which a processor, which implements the functions of the entire system including the plurality of processing units with one integrated circuit (IC) chip, is used. In this manner, various processing units are configured by one or more of the various processors described above, as the hardware structure.

### Explanation of References

10: mobile terminal
11: CPU
14: internal memory
15: display
16: touch pad
17: GPS reception unit
18: camera unit
18A: inward-facing camera unit
18B: outward-facing camera unit
19: microphone unit
20: speaker unit
21: wireless communication unit
22: short-range wireless communication unit
23: sensor unit
30: touch panel
100: printer
110: instant film
111: environment information acquisition unit
111A: position determination unit
111B: object recognition unit
112: behavior history information acquisition unit
113: behavior history database management unit
114: AR object determination unit
114A: main subject determination unit
114B: disposition region determination unit
114C: first element determination unit
114D: second element determination unit
115: AR image generation unit
116: display control unit
117: recording control unit
121: map database
122: behavior history database
123: AR object database
ARI: AR image
ARO: AR object
DA1: dice image
DA2: dice image
I: captured image
M: monument
MO: main subject
R: disposition region
SSB: shutter button
STA: stage image
STB: start button
S10 to S25: operation procedure of mobile terminal in case of performing AR display
S21_1 to S21_3: procedure of processing of determining display form of AR object
S21_11 to S21_17: processing procedure in case of determining display form of AR object by performing lottery draw

## Claims

1. An information processing device comprising:
a processor,
wherein the processor is configured to:
acquire first information related to an environment of a space in which an object is caused to appear;
acquire second information related to a behavior history of a user;
determine a first element related to the object based on the first information;
determine a second element related to the object based on the second information; and
determine the object to be caused to appear in the space based on the first element and the second element.

2. The information processing device according to claim 1,
wherein the processor is configured to:
acquire a first image obtained by imaging the space in which the object is caused to appear; and
generate a second image in which the object is superimposed on the first image.

3. The information processing device according to claim 2,
wherein the processor is configured to: process the first image to recognize an object in the first image or a scene of the first image and acquire the first information.

4. The information processing device according to claim 3,
wherein the processor is configured to:
acquire information on a position of the user; and
recognize the object in the first image or the scene of the first image and acquire the first information in a case in which the user exists in a specific area.

5. The information processing device according to claim 1,
wherein the second information includes information on a history of movement of the user or information on a history of the object caused to appear.

6. The information processing device according to any one of claims 1 to 5,
wherein the first element is a type of the object to be caused to appear, and
the second element is a display form or an attribute of the object to be caused to appear.

7. The information processing device according to claim 6,
wherein the processor is configured to:
process an image obtained by imaging the space in which the object is caused to appear, to recognize a main subject; and
determine a disposition region of the object to be caused to appear in the space based on a position of the main subject in the space.

8. The information processing device according to claim 7,
wherein the processor is configured to: determine the type of the object to be caused to appear based on the first information in the disposition region.

9. The information processing device according to claim 6,
wherein the processor is configured to: randomly determine the display form of the object in a case in which the behavior history of the user satisfies a specific condition.

10. The information processing device according to any one of claims 2 to 4,
wherein the processor is configured to: change a display form or an attribute of the object in response to an instruction to output the second image.

11. An information processing method comprising:
a step of acquiring first information related to an environment of a space in which an object is caused to appear;
a step of acquiring second information related to a behavior history of a user;
a step of determining a first element related to the object based on the first information;
a step of determining a second element related to the object based on the second information; and
a step of determining the object to be caused to appear in the space based on the first element and the second element.

12. An information processing program causing a computer to implement:
a function of acquiring first information related to an environment of a space in which an object is caused to appear;
a function of acquiring second information related to a behavior history of a user;
a function of determining a first element related to the object based on the first information;
a function of determining a second element related to the object based on the second information; and
a function of determining the object to be caused to appear in the space based on the first element and the second element.

13. A non-transitory computer-readable recording medium on which the program according to claim 12 is recorded.
